Europäisches Patentamt

European Patent Office

Office européen des brevets

(11) Publication number: **0 051 281**
**B1**

# (12) EUROPEAN PATENT SPECIFICATION

(45) Date of publication of patent specification: 29.01.86

(51) Int. Cl.⁴: **B 41 M 5/24,** B 41 M 5/26

(21) Application number: **81109245.1**

(22) Date of filing: **29.10.81**

(54) Composition for use in making an ablative imaging medium.

(30) Priority: **31.10.80 US 202839**

(43) Date of publication of application:
**12.05.82 Bulletin 82/19**

(45) Publication of the grant of the patent:
**29.01.86 Bulletin 86/05**

(84) Designated Contracting States:
**AT BE CH DE FR GB IT LI LU NL SE**

(56) References cited:
**WO-A-79/00404
US-A-3 448 458
US-A-4 032 691**

**COLOUR INDEX, 3rd edition, vol. 4, 1971, page 4016, The Society of Dyers and Colourists, BRADFORD (GB)**

(73) Proprietor: **DISCOVISION ASSOCIATES
3300 Hyland Avenue
Costa Mesa California 92626 (US)**

(72) Inventor: **Wilkinson, Richard L.
21341 Avenida Manantial
El Toro California 92630 (US)**
Inventor: **Crowell, Richard W.
14682 Cathy Street
Westminster California 92683 (US)**

(74) Representative: **Fleuchaus, Leo, Dipl.-Ing. et al
Fleuchaus & Wehser Melchiorstrasse 42
D-8000 München 71 (DE)**

Courier Press, Leamington Spa, England.

## Description

This invention relates to a solution for forming a thin uniform ablative imaging medium, as referred to in the preamble of claim 1.

Imaging media solutions of this type are described in WO—A—7 900 404 and are of particular use in making video recording discs. The solution consists of a dye which absorbs energy at the wavelength of a scanning laser beam and of nitrocellulose. The nitrocellulose and the dye are dissolved in a sufficient amount of a solvent. The video discs include a thin, light-absorbing recording layer formed from such a solution. These solutions are also useful in the formation of microlithographic films, and the formation of chemical etch resist-type films used in the manufacture of integrated circuits and the like. The thin layers or films are typically ablated by scanning them with a laser beam or electron beam.

Information is recorded in the nitrocellulose recording layer by scanning it with an intensity-modulated beam of light, to selectively energize prescribed portions of the layer and thereby induce spaced explosions in it. This produces a succession of spaced, information-bearing microscopic pits.

The nitrocellulose recording layer is produced by first forming an imaging medium solution of the nitrocellulose polymer, the dye, and the solvent. The solution is poured onto a smooth, planar surface of a substrate, after which the substrate is spun at a prescribed angular velocity, to form a thin, uniform film of prescribed thickness. The particular thickness achieved is dependent on the viscosity of the solution and on the spin velocity.

Ideally, the imaging solution should be highly absorptive of light at the wavelength of the intensity-modulated beam of light to be used in recording, and should have a prescribed viscosity that is not subject to significant variations, so that the prescribed thickness for the layer can be readily achieved.

It is, therefore, an object of the invention to provide a specific imaging medium solution, that has a viscosity stabilized at a prescribed level. This object is achieved by a solution as characterized in claim 1.

The nitrocellulose and the dye are thoroughly mixed in the solvent, to form a homogenous imaging medium solution that has a prescribed, stabilized viscosity and that is highly absorptive of light at a wavelength of about 480 to 490 nanometers. The solution is preferably substantially free of foreign particles larger than about 0.2 microns in size, and the nitrocellulose preferably has a nitrogen content of about 12%. Also, the solution can sometimes further include about 55 to 110 parts be weight isopropyl alcohol, which is introduced to the solution as an additive with the nitrocellulose.

The solution can advantageously be formed by mixing together the dye and a solvent to form a dye dispersion, mixing together the nitrocellulose polymer and a solvent to form a nitrocellulose solution, and mixing together the dye dispersion and the nitrocellulose solution to form the imaging medium solution. Finally, the imaging medium solution may be heated to a temperature greater than about 50°C, and maintained at that temperature for a prescribed time duration, to faster stabilize the viscosity of the solution at a prescribed level.

Other aspects and advantages of the present invention will become apparent from the following description, which illustrates, by way of example, the principles of the invention.

The present invention resides in a solution suitable for use in forming an ablative imaging medium such as a video disc, a microlithographic film, or a chemical etch resist-type film. In the case of video discs, the solution is used to form a thin, uniform recording layer on a smooth planar surface of a substrate. The solution is typically poured onto the substrate surface, and the substrate is then spun at a prescribed angular velocity, the evaporate a solvent in solution and yield a thin film having a prescribed thickness.

In accordance with the invention, the composition of the imaging medium solution consists essentially of about 200 parts (by weight) nitrocellulose and about 37 parts disperse red I dye dissolved in an effective amount of a solvent. The nitrocellulose and the dye are thoroughly mixed in the solvent, to form a homogenous solution that has a viscosity of about 8 centipoise and that is highly absorptive of light at a wavelength of about 480 to 490 nanometers. The nitrocellulose has a nitrogen content of about 12 percent, and the solvent is Cellosolve acetate, in an amount of about 11,400 parts.

In one method of manufacturing the imaging medium solution on a production scale, a 151 l (40 gallon) batch of the solution is prepared. In general terms, about 468 grams of disperse red I dye is mixed with about 37 liters of Cellosolve acetate solvent, to produce a dye solution, and about 3600 grams of approximately 70% nitrocellulose solution is propanol is mixed with about 62 liters of Cellosolve (trademark) acetate solvent, to form a nitrocellulose solution. The dye and nitrocellulose solutions are than mixed together with about 49 liters of additional Cellosolve acetate solvent, to produce about 151 l (40 gallons) of the imaging medium solution, which is then heated in a prescribed fashion to stabilize its viscosity.

The disperse red I dye is an azo dye and has the chemical formula $C_{16}H_{18}N_4O_3$. Suitable alternative solvents to the Cellosolve (trademark) acetate solvent include amyl acetate, butyl acetate, and Carbitol (trademark), which are all readily commercially available.

The nitrocellulose polymer is normally shipped with a content of nominally 30% ± 10% isopropyl alcohol, to reduce flamability hazards. The nitrocellulose preferably has a nitrogen content of about 12%, and has a viscosity measured to be 5 to 6 seconds.

More particularly, the dye dispersion is prepared by adding 468 ± 0.5 grams of disperse red I dye to 25 liters of filtered Cellosolve (trademark) acetate solvent, and then mixing the combination for about 30 minutes in a covered stainless steel vessel. The final 12 liters of filtered solvent is then added and the mixing is continued for two hours. The dye dispersion is then sequentially filtered using a pre-filter equivalent to a millipore AP15-124 or number 40 Whatman (trademark) paper, under 0,56 kg/cm² (8 pounds per square inch) of nitrogen pressure, and using a 0.2 micron final filter equivalent to a millipore FGLP 142-50.

The solids content of the filtered dye solution is determined using conventional techniques. A range of about 1.27 ± 0.04% should be expected. The transmission of the filtered dye solution at 480 nanometers is measured after a 500:1 dilution using conventional techniques and it is expected to be about 20 ± 1% for a 1 cm cell. If the measured transmission is not within this range, either filtered dye solution or solvent is added in an appropriate amount to controllably adjust the transmission to the correct value.

As previously mentioned, the nitrocellulose is supplied containing nominally 30% isopropyl alcohol. Due to settling, evaporation, and raw material variations, however, this percentage can vary substantially. Accordingly, the solids content of each nitrocellulose batch is determined prior to preparation of the nitrocellulose solution. If the solids content is determined to be more or less than 70.0% of the nitrocellulose batch, the specific amount of nitrocellulose to be used in forming the nitrocellulose solution is modified to be proportionately less or more than the specified 3600 grams of approximately 70% nitrocellulose solution in propanol.

The nitrocellulose solution is formed by slowly adding the nitrocellulose polymer to 37 liters of filtered Cellosolve acetate solvent in a stainless steel mixing vessel, with constant agitation. The polymer is added at a rate sufficiently low to avoid settling on the bottom of the vessel. After mixing for one hour, 25 liters of additional filtered solvent is added and agitation is continued for thirty minutes, to produce a thoroughly dissolved nitrocellulose polymer solution.

The imaging medium solution is formed by slowly adding the filtered dye solution to the nitrocellulose polymer solution, under constant agitation. To prevent shocking, only about 1.2 liters of the dye solution are added per minute, whereby about thirty minutes are required to complete the mixing. Up to 49 liters of additional filtered Cellosolve acetate solvent are then added to the mixture, with constant agitation. The specific amount of solvent added depends on the amount of particles removed in the step of filtering the dye solution.

The vessel containing the solution is then covered, and the temperature of the solution is raised to 60°C, while maintaining the agitation. The solution is maintained at this temperature for at least one hour, after which it is cooled back to room temperature. The cooled solution is then filtered with a 0.2 micron filter equivalent to a millipore FGLP 142-50.

The cooled imaging medium solution is then tested, using conventional techniques, for its viscosity, solids content, and transmission at 480 nanometers. If any of these three tests show that the solution is not within a prescribed, satisfactory range, the composition of the solution is controllably adjusted, accordingly.

More particularly, if the viscosity of the imaging medium solution is determined to be greater than 8.0 ± 0.5 centipoise, an appropriate amount of additional filtered solvent is added to lower the viscosity to the correct level. Conversely, if the viscosity is determined to be less than this prescribed range, appropriate additional amounts of the dye solution and nitrocellulose polymer solution, in their correct stoichiometric proportions, are added to the solution to raise the viscosity to the correct level.

Similarly, if the solids content of the imaging medium solution is found to be greater than or less than 2.0 ± 0.1%, appropriate additional amounts of filtered solvent or dye and nitrocellulose solutions are added, to bring the solids contents to the appropriate, expected level. The transmission of the solution after a 500:1 dilution is expected to be 20 ± 1% at 480 nanometers for a 1 cm cell. If the solution is found to be outside this range, appropriate amounts of dye solution or nitrocellulose solution and solvent are added, to bring the solution to the correct level.

It will be apparent from the foregoing description that the present invention provides a solution that can be used effectively in forming ablative imaging media such as video discs, microlithographic films, and chemical etch resist-type films. The solution is highly absorptive at a prescribed wavelength, and has highly stabilized viscosity, whereby films of precise, uniform thicknesses can be formed.

## Claims

1. A solution suitable for forming a thin, uniform ablative imaging medium, said solution consisting essentially of: nitrocellulose; a dye which is absorptive of light having a wavelength of about 480 to 490 nanometers; and a sufficient amount of a solvent to dissolve the nitrocellulose and the dye, characterized in that said dye is disperse red I dye, and in that about 200 parts by weight of said nitrocellulose and about 37 parts by weight of said dye are present.

2. A solution as defined in Claim 1, wherein the nitrocellulose has a nitrogen content of about twelve percent (12%).

3. A solution as defined in Claim 1, and further including about 55 to 110 parts by weight isopropyl alcohol.

4. A solution as defined in Claim 1, wherein the amount of the solvent is about 11,400 parts by weight.

5. A solution as defined in Claim 4, wherein the solvent is Cellosolve (trademark) acetate.

6. A solution as defined in Claim 4, wherein the solution has a viscosity of between 8 and 10 centipoise measured at 30°C.

## Patentansprüche

1. Eine Lösung, die zur Herstellung eines dünnen gleichförmigen abtragbaren Bildaufnahmemediums geeignet ist, wobei die Lösung im wesentlichen aus folgenden Bestandteilen besteht; Nitrozellulose; ein Farbstoff, der Licht absorbiert, das eine Wellenlänge von ungefähr 480 bis 490 Nanometer aufweist; und eine ausreichende Menge eines Lösungsmittels, um die Nitrozellulose und den Farbstoff aufzulösen, dadurch gekennzeichnet, daß der Farbstoff disperser Rot I Farbstoff ist und daß ungefähr 200 Gewichtsteile der Nitrozellulose und ungefähr 37 Gewichtsteile des Farbstoffs vorhanden sind.

2. Lösung nach Anspruch 1, in der die Nitrozellulose einen Stickstoffgehalt von ungefähr zwölf Prozent (12 %) aufweist.

3. Lösung nach Anspruch 1, die weiter ungefähr 55 bis 110 Gewichtsteile Isopropylalkohol enthält.

4. Lösung nach Anspruch 1, in der die Menge des Lösungsmittels ungefähr 11400 Gewichtsteile beträgt.

5. Lösung nach Anspruch 4, in der das Lösungsmittel Cellosolve- (Warenzeichen) -Acetat ist.

6. Lösung nach Anspruch 4, in der die Lösung eine Viskosität von zwischen 8 und 10 Zentipoise aufweist, die bei 30°C gemessen wurden.

## Revendications

1. Solution appropriée pour former un support d'enregistrement par ablation fin, uniforme, ladie solution comportant essentiellement de la nitrocellulose; un colorant qui est absorbant de lumière ayant un longueur d'onde d'environ 480 à 490 nanomètres; et une quantité suffisante d'un solvant pour dissoudre la nitrocellulose et le colorant caractérisée en ce que ledit colorant est un colorant rouge I dispersé et en ce qu'environ 200 parts en poids de ladite nitrocellulose et environ 37 parts en poids dudit colorant sont présents.

2. Solution selon la revendication 1, caractérisée en ce que la nitrocellulose a une teneur en azote d'environ douze pour cent (12 %).

3. Solution selon la revendication 1, caractérisée en ce qu'elle comprend de plus environ 55 à 110 parts en poids d'alcool isopropyle.

4. Solution selon la revendication 1, caractérisée en ce que la quantité du solvant est d'environ 11,400 parts en poids.

5. Solution selon la revendication 4, caractérisée en ce que le solvant est de l'acétate Cellosolve (marque déposée).

6. Solution selon la revendication 4, caractérisée en ce que la solution a une viscosité d'entre 8 et 10 centipoises mesurées à 30°C.